# EUROPÄISCHE PATENTSCHRIFT

(11) **EP 3 290 094 B1**
(45) Veröffentlichungstag und Bekanntmachung des Hinweises auf die Patenterteilung: **31.07.2019**
(21) Anmeldenummer: 16186216.4
(22) Anmeldetag: 30.08.2016
(51) Int. Cl.: B01F 5/10, B01D 19/00, B01F 7/00

(54) **VORRICHTUNG SOWIE VERFAHREN ZUM ENTGASEN EINER FLÜSSIGKEIT**
DEVICE AND METHOD FOR REMOVING GAS FROM A LIQUID
DISPOSITIF ET PROCÉDÉ DE DÉGAZAGE D'UN LIQUIDE

(43) Veröffentlichungstag der Anmeldung: 07.03.2018
(73) Patentinhaber: Sika Technology AG, 6340 Baar (CH)
(72) Erfinder: TROST, Jürgen, 72574 Bad Urach (DE)
(74) Vertreter: Sika Patent Attorneys

(56) Entgegenhaltungen:
- EP-A1- 0 856 135
- DE-A1- 2 259 740
- DE-U1- 29 902 209
- GB-A- 702 087
- US-A- 2 625 236
- US-A- 4 392 874
- US-A- 4 970 167

## Beschreibung

### Technisches Gebiet

Die Erfindung betrifft eine Vorrichtung sowie ein Verfahren zum Entgasen einer Flüssigkeit, wobei die Flüssigkeit in einem insbesondere evakuierbaren Behälter aufgenommen ist.

### Stand der Technik

Im Stand der Technik sind verschiedene Vorrichtungen und Verfahren zum Entgasen von Flüssigkeiten bekannt. Beispielsweise wird die Flüssigkeit dazu einem Vakuum (bzw. Unterdruck) ausgesetzt, so dass das Gas innerhalb der Flüssigkeit zuverlässiger und schneller entweicht. Beispielsweise ist es bekannt, das (flüssige) Produkt auf einen Drehteller aufzubringen (z.B. DE2259740A1). Bei einem Rotieren des Tellers wird das Produkt an eine Innenwand eines Behälters geschleudert. Dort können Bläschen (bzw. Gaseinschlüsse) zerplatzen, wobei eine Vakuumpumpe die freiwerdenden Gase absaugt. Derartige und ähnliche Vorrichtungen sind jedoch vergleichsweise aufwändig und insbesondere schwer zu reinigen.

Vor diesem Hintergrund liegt der Erfindung die Aufgabe zu Grunde, eine Vorrichtung und ein entsprechendes Verfahren zum Entgasen einer Flüssigkeit vorzuschlagen, die (konstruktiv) möglichst einfach ausgestaltet sein soll und insbesondere einfach zu reinigen sein soll.

### Offenbarung der Erfindung

Die obige Aufgabe wird insbesondere durch eine Entgasvorrichtung zum Entgasen einer Flüssigkeit, umfassend einen insbesondere evakuierbaren Behälter, insbesondere Mischbehälter, zur Aufnahme der zu entgasenden Flüssigkeit, eine Abfuhreinrichtung zum Abführen von in dem Behälter stehender Flüssigkeit sowie eine Zufuhreinrichtung zum Zuführen von Flüssigkeit, wobei die Zufuhreinrichtung mit der Abfuhreinrichtung fluidleitend verbunden ist derart, dass von der Abfuhreinrichtung abgeführte Flüssigkeit über die Zufuhreinrichtung zurück in die in dem Behälter stehende Flüssigkeit geführt werden kann, wobei die Zufuhreinrichtung mindestens eine Düse umfasst. Die Düse ist vorzugsweise derart positioniert, dass sie im Gebrauch der Entgasvorrichtung oberhalb einer Flüssigkeitsoberfläche der in dem Behälter stehenden Flüssigkeit angeordnet ist. Die Höhe der Anordnung der Düse hängt also von der Höhe der Flüssigkeitsoberfläche ab, die wiederum durch Funktion und Struktur des Behälters vorgegeben ist. Beispielsweise kann die Düse auf mindestens 60 %, oder mindestens 80 % oder mindestens 90 % der Höhe des Behälters (gerechnet von einem tiefsten Punkt eines Behälterhohlraumes bis zum einem höchsten Punkt des Behälterhohlraums) angeordnet sein.

Ein Kerngedanke der Erfindung liegt darin, einen Kreislauf auszubilden, der seinen Ursprung in der in dem Behälter stehenden Flüssigkeit hat und über Zufuhreinrichtung, Abfuhreinrichtung und eine Fluidverbindung zwischen Zufuhr- und Abfuhreinrichtung zurück in die in dem Behälter stehende Flüssigkeit geführt wird. Vorzugsweise wird die Flüssigkeit dazu aus dem Behälter herausgeführt. Durch das Vorsehen der Düse (insbesondere oberhalb der in dem Behälter stehenden Flüssigkeit) können Lufteinschlüsse (Blasen) innerhalb der Flüssigkeit effektiv entfernt werden. Insbesondere können die Blasen innerhalb eines aus der mindestens einen Düse austretenden Flüssigkeitsstrahls diesen Flüssigkeitsstrahl auf einfache Art und Weise verlassen, bevor die Flüssigkeit im Flüssigkeitsstrahl mit der im Behälter stehenden Flüssigkeit wiedervereinigt wird. Insgesamt wird eine äußerst einfache Struktur bereitgestellt, die auch einfach zu reinigen ist.

Eine Verbindungsleitung zwischen Zufuhr- und Abfuhreinrichtung kann außerhalb des Behälters verlaufen. Vorzugsweise wird die Verbindungsleitung zumindest abschnittsweise durch eine zu und/oder von einer Mischeinrichtung führende Leitung gebildet. Bei der Mischeinrichtung handelt es sich vorzugsweise um eine Mischeinrichtung, die außerhalb des Behälters angeordnet ist. Beispielsweise kann in der Mischeinrichtung ein Pulver und eine (insbesondere aus dem Behälter stammende) Flüssigkeit zu einer Dispersion vermischt werden und dem Behälter zugeführt werden. Ein bevorzugter Aspekt der Erfindung liegt nun darin, dass man Leitungen, die ohnehin vorgesehen sind, um einen weiteren Stoff zuzumischen, ausnutzt, um der mindestens einen Düse einen Teil der Flüssigkeit zuzuführen. Dabei wird die Mischeinrichtung (beim Entgasen) vorzugsweise kurzgeschlossen bzw. ist kurzschließbar.

Die Zufuhreinrichtung weist vorzugsweise mindestens zwei, noch weiter vorzugsweise mindestens drei, noch weiter vorzugsweise mindestens vier, noch weiter vorzugsweise mindestens fünf Düsen auf. Dadurch können mehrere (feine bzw. dünnschichtige) Flüssigkeitsstrahle erzeugt werden, so dass die Flüssigkeit effektiv entgast werden kann.

Der Abschnitt der Zufuhreinrichtung, in dem die mindestens eine Düse angeordnet ist, kann rohrförmig ausgebildet sein. Beispielsweise kann dann die mindestens eine Düse an einer Endfläche dieses Rohres ausgebildet sein und/oder (insbesondere benachbart zu einer solchen Endfläche) an einer Umfangsendfläche des Rohres.

Eine oder mehrere oder alle Düse(n) können schlitzförmig ausgebildet sein. Unter einer "Schlitzform" ist insbesondere eine Austrittsfläche zu verstehen, bei der eine Länge der Austrittsfläche mindestens zweimal, vorzugsweise mindestens dreimal, noch weiter vorzugsweise mindestens fünfmal so groß ist wie eine Breite der Austrittsfläche. Durch eine derartige Schlitzform kann ein flacher (dünner) Flüssigkeitsstrahl realisiert werden, so dass eine effektive Entgasung stattfinden kann. Alternativ können eine Düse oder mehrere Düsen oder alle Düsen rund ausgebildet sein (insbesondere kreisrund). Eine Austrittsfläche von einer Düse oder von mehreren Düsen oder von allen Düsen beträgt vorzugsweise höchstens 25 mm², weiter vorzugsweise höchstens 15 mm², noch weiter vorzugsweise höchstens 10 mm². Weiterhin kann die Austrittsfläche von einer Düse oder von mehreren Düsen oder von allen Düsen mindestens 2 mm², vorzugsweise mindestens 5 mm² betragen. Durch derartige, vergleichsweise kleine Düsen bzw. Austrittsflächen kann effektiv eine Entgasung erfolgen.

Eine Düse oder mehrere der Düsen oder alle Düsen können in einer Endfläche und/oder in einer Seitenfläche der Zufuhreinrichtung angeordnet sein. Diese Endfläche ist vorzugsweise gegenüber der Strömungsrichtung eines in der Zufuhreinrichtung strömenden Fluids abgeschrägt. Handelt es sich bei der Zufuhreinrichtung um ein Rohr oder einen Rohrabschnitt, wird die Richtung des strömenden Fluids durch die axiale Richtung vorgegeben. Ein Winkel der Endfläche gegenüber der Strömungsrichtung kann beispielsweise mindestens 45 Grad oder mindestens 50 Grad betragen. Weiterhin kann dieser Winkel höchstens 90 Grand oder höchstens 85 Grad betragen. Durch eine derartige Ausgestaltung wird ebenfalls eine effektive einfache Entgasung ermöglicht.

Die obengenannte Aufgabe wird weiterhin gelöst durch eine Entgasvorrichtung, insbesondere der oben beschriebenen Art, zum Entgasen einer Flüssigkeit, umfassend einen insbesondere evakuierbaren Behälter, insbesondere Mischbehälter, zur Aufnahme der zu entgasenden Flüssigkeit sowie einen Rechenrührer mit mindestens einem rotierbaren Arm und einer Vielzahl von Zinken, die von dem mindestens einen Arm abstehen und zum Eintauchen in die Flüssigkeit ausgebildet sind. Ein Kerngedanke dieses Aspektes liegt darin, einen Rechenrührer mit einer Vielzahl von Zinken zur Entgasung der Flüssigkeit vorzusehen. Durch einen derartigen Rechenrührer kann effektiv Gas aus der Flüssigkeit entfernt werden, ohne dass dazu eine besonders ausgeprägte Drehbewegung (Turbulenz) der Flüssigkeit entsteht. Damit wird auf einfache Art und Weise eine Entgasung der Flüssigkeit ermöglicht. Insbesondere können die Zinken des Rechenrührers eine Flüssigkeitsoberfläche öffnen, so dass die eingeschlossenen Luftblasen zerplatzen. Weiterhin ist ein derartiger Rechenrührer vergleichsweise einfach zu reinigen. Chemische Entgasungsmittel sind nicht notwendig. In einer konkreten Ausführungsform kann der Rechenrührer aus (rostfreiem) Stahl (Edelstahl) vorzugsweise mit einer glatten Oberfläche ausgebildet sein.

Der Rechenrührer weist vorzugsweise mindestens vier, weiter vorzugsweise mindestens sechs weiter vorzugsweise mindestens acht Zinken auf. Weiterhin kann der Rechenrührer weniger als 30 oder weniger als 20 Zinken aufweisen. Weiterhin kann der Rechenrührer mehrere Arme (beispielsweise mindestens zwei oder mindestens drei oder mindestens vier Arme) aufweisen, an denen (jeweils) eine Vielzahl von Zinken angeordnet ist. Es ist auch denkbar, dass eine Mehrzahl der Zinken an mehreren Armen, beispielsweise zwei Armen, angeordnet ist (z.B. in einem oberen Abschnitt an einem oberen Arm und in einem unteren Abschnitt an einem unteren Arm). Insgesamt wird eine Struktur bereitgestellt, die eine effektive Entgasung ermöglicht.

Ein Zinken oder mehrere oder alle Zinken können wie folgt ausgebildet und/oder angeordnet sein:
- Länge: mindestens 200 mm, vorzugsweise mindestens 300 mm, weiter vorzugsweise mindestens 400 mm und/oder höchstens 800 mm, vorzugsweise höchstens 600 mm, weiter vorzugsweise höchstens 500 mm und/oder
- Durchmesser: mindestens 2 mm, vorzugsweise mindestens 4 mm, weiter vorzugsweise mindestens 5 mm und/oder höchstens 30 mm, vorzugsweise höchstens 18 mm, weiter vorzugsweise höchstens 10 mm und/oder
- (durchschnittlicher) Abstand zwischen zwei benachbarten Zinken: mindestens 50 mm, vorzugsweise mindestens 70 mm, weiter vorzugsweise mindestens 90 mm und/oder höchstens 300 mm, vorzugsweise höchstens 180 mm, weiter vorzugsweise höchstens 120 mm und/oder
- Verhältnis von Länge zu Durchmesser: mindestens 20, vorzugsweise mindestens 30, weiter vorzugsweise mindestens 35 und/oder höchstens 100, vorzugsweise höchstens 70, weiter vorzugsweise höchstens 60 mm und/oder
- im Querschnitt rund oder vieleckig, insbesondere dreieckig oder viereckig oder fünfeckig oder sechseckig oder mehreckig.

Insbesondere ist bevorzugt, dass ein Durchmesser vergleichsweise klein ist, so dass der oder die Zinken vergleichsweise wenig Flüssigkeit bewegen und in Rotation versetzen. Weiterhin ist es bevorzugt, dass die Zinken vergleichsweise lang ausgebildet sind. Dadurch kann die Flüssigkeitsoberfläche über einen weiten Abschnitt aufgebrochen werden und die Lufteinschlüsse entfernt werden. Besonders bevorzugt ist also ein vergleichsweise langer und gleichzeitig dünner Zinken, so dass ein Verhältnis von Länge zu Durchmesser vergleichsweise groß ist. Weiterhin ist ein runder (kreisrunder) Querschnitt der Zinken bevorzugt, da damit ebenfalls ein vergleichsweise effektives Aufbrechen der Flüssigkeitsoberfläche erfolgen kann, ohne dass viel Flüssigkeit bewegt bzw. in Rotation versetzt wird. Die Zinken können aufgrund Ihrer Länge bei unterschiedlich hohen Füllständen, die während der Entgasung auftreten können, wirken.

Ein Zinken oder mehrere oder alle Zinken können von einem Arm, auf dem er bzw. sie angeordnet ist bzw. sind in zwei Richtungen abstehen. Bevorzugt ist es dabei, wenn ein Abschnitt des Zinkens, der von dem Arm nach unten absteht, mindestens 1,5mal, vorzugsweise mindestens 2,5mal, noch weiter vorzugsweise mindestens 3mal so groß ist wie ein Abschnitt, der von dem Zinken nach oben absteht. "Oben" und "unten" sind üblicherweise durch den Flüssigkeitsbehälter vorgegeben.

Der mindestens eine Arm kann horizontal bzw. senkrecht zur Schwerkraft ausgebildet sind (ggf. jedoch auch in einem anderen Winkel).

Zumindest abschnittsweise kann ein Zinken oder mehrere oder alle der Zinken von einem Arm, auf dem er bzw. sie angeordnet ist bzw. sind nach oben abstehen, beispielsweise um mindestens 50 mm oder mindestens 80 mm.

Ein Zinken oder mehrere oder alle Zinken können so angeordnet sein, dass er bzw. sie im Betrieb der Entgasvorrichtung teilweise aus der Flüssigkeit herausragt bzw. herausragen. Durch die in den vier letzten Absätzen beschriebenen Weiterbildungen kann insgesamt ein effektives Aufbrechen der Flüssigkeitsoberfläche erreicht werden, so dass das Gas effektiv entweichen kann.

In dem Behälter kann mindestens ein Rührer zum Mischen und/oder Rühren der Flüssigkeit (insbesondere zusätzlich zu dem Rechenrührer) vorgesehen sein. Bei der Entgasvorrichtung handelt es sich vorzugsweise um eine kombinierte Misch- und/oder Rühr- und Entgasvorrichtung, die also einerseits ausgebildet ist, einen Stoff zu rühren und/oder mindestens zwei Stoffe zu mischen und andererseits ausgebildet ist, den Stoff oder das Stoffgemisch zu entgasen. Gerade in einer derartigen kombinierten Einrichtung können die Strukturen für das Entgasen besonders einfach und effektiv eingebracht werden, ohne dass eine Vielzahl von weiteren Komponenten notwendig wäre. Dadurch kann auf einfache Art und Weise eine einfach zu reinigende Vorrichtung bereitgestellt werden.

Insbesondere kann der Rechenrührer mit einem (weiteren, vorzugsweise langsam laufenden) Rührorgan, wie beispielsweise einem Abstreifer, Ankerrührwerk oder Balkenrührer kombiniert werden. Dabei kann der Rechenrührer gemeinsam mit einem solchen Rührorgan angetrieben werden (beispielsweise über eine gemeinsame Welle). Alternativ kann der Rechenrührer auch separat angetrieben werden (beispielsweise durch eine zusätzlich vorgesehene Welle, insbesondere Hohlwelle).

Im Allgemeinen kann der Rechenrührer als Langsamläufer ausgeführt sein, der vorzugsweise für Drehzahlen im Bereich von (ungefähr) 9 bis 30 U/min ausgelegt bzw. konfiguriert ist. Eine Umfangsgeschwindigkeit kann (ungefähr) 0,6 bis 2,0 m/s betragen.

Vorzugsweise ist in den evakuierbaren Behälter ein Unterdruck von mindestens 100 mbar, weiter vorzugsweise mindestens 250 mbar, noch weiter vorzugsweise mindestens 500 mbar, noch weiter vorzugsweise mindestens 900 mbar, noch weiter vorzugsweise mindestens 950 mbar herstellbar. Dazu kann beispielsweise eine entsprechende Vakuumpumpe in oder an der Entgasvorrichtung vorgesehen sein. In jedem Fall können durch einen Unterdruck kleine (ggf. koagulierte) Luftblasen besonders effektiv entfernt werden. Unter "Unterdruck" ist ein Druck in Relation zum normalen Luftdruck der Umgebung (insbesondere 1013 mbar) zu verstehen. Insofern ist die Evakuierbarkeit bezogen auf einen "Normdruck" von insbesondere 1013 mbar zu verstehen.

Die oben genannte Aufgabe wird insbesondere durch die Verwendung einer Vorrichtung der oben beschriebenen Art zum Entgasen einer Flüssigkeit gelöst.

Weiterhin wird die obengenannte Aufgabe insbesondere durch ein Verfahren zum Entgasen einer Flüssigkeit, insbesondere unter Verwendung einer Entgasvorrichtung der oben beschriebenen Art, wobei eine Entgasung die Schritte eines Abführens von in einem, insbesondere evakuierbaren Behälter stehender Flüssigkeit und eines Rückführens der abgeführten Flüssigkeit in die in dem Behälter stehende Flüssigkeit über mindestens eine Düse, wobei die Düse oberhalb einer Flüssigkeitsoberfläche der in dem Behälter stehenden Flüssigkeit angeordnet ist, umfasst, gelöst.

Weiterhin wird die obige Aufgabe durch ein Verfahren zum Entgasen (bzw. eines Entgasens) einer Flüssigkeit, insbesondere der oben beschriebenen Art, vorzugsweise unter Verwendung einer Entgasvorrichtung der oben beschriebenen Art, gelöst, wobei die sich in einem, insbesondere evakuierbaren, Behälter befindliche Flüssigkeit mit einem Rechenrührer umgerührt wird.

In einer konkreten Ausführungsform des Verfahrens kann der Entgasungsvorgang bei Atmosphärendruck gestartet werden (zu diesem Zeitpunkt liegt eine nicht-entgaste Mischung vor, die beispielsweise aufgrund des Dispergierens von Feststoffen, insbesondere pulverförmigen Stoffen, in flüssige und/oder pastöse Stoffe Luftbläschen enthält). Der Druck in dem evakuierbaren Behälter kann nun (schrittweise) abgesenkt werden, was einer (schrittweisen) Erhöhung des Unterdrucks entspricht. Besonders bevorzugt ist es dabei, dass ein Rechenrührer, wie oben beschrieben, vorgesehen ist und dieser Rechenrührer während des gesamten Zeitraums (der schrittweisen Erhöhung des Unterdrucks) in Betrieb ist (läuft). Beispielsweise kann der Rechenrührer in einem Bereich von 0 mbar bis zu einem vorbestimmten oberen Grenzwert Y₁ von beispielsweise (maximal) 950mbar oder 980mbar laufen. Weiterhin ist vorzugsweise die oben beschriebene Zirkulation über die (mindestens eine) Düse realisiert, wobei jedoch diese Zirkulation nicht über den gesamten Bereich der (schrittweisen) Erhöhung des Unterdrucks betrieben wird, beispielsweise nur in einem Bereich von 0 mbar bis zu einem Grenzwert Y₂, wobei vorzugsweise gilt: Y₂ < Y₁, insbesondere Y₂ < Y₁ - 50mbar oder sogar Y₂ < Y₁ - 100mbar, beispielsweise bis (maximal) 800 mbar oder (maximal) 940 mbar Unterdruck.

Dadurch, dass vorzugsweise die Zirkulation über die (mindestens eine) Düse bei einem (maximalen) vorbestimmten Unterdruck gestoppt wird, kann effektiv vermieden werden, dass Kavitation auftritt. Je nach Drehzahl einer Pumpe für die Zirkulation bzw. Förderleistung der Pumpe (ggf. auch Pumpentyp) und je nach Flüssigkeit und/oder Paste, je nach Dampfdruck der Flüssigkomponenten bei der jeweiligen Temperatur wird dann der Druck nur soweit abgesenkt, dass keine Kavitation auftritt.

Während der Druck jedoch schrittweise abgesenkt wird (bzw. der Unterdruck schrittweise erhöht wird), kann der Rechenrührer andauernd laufen. Dadurch kann eine vergleichsweise schnelle Entgasung ermöglicht werden.

Durch das (rechtzeitige) Stoppen der Zirkulation über die (mindestens eine) Düse kann eine Blasenbildung und Kollabieren der Dampfblasen (was einer Pumpe für die Zirkulation schaden könnte und sich negativ auf die Entgasung auswirken könnte) verhindert werden. Gerade durch eine Kombination der Maßnahmen (Zirkulation über die Düse sowie Rechenrührer) kann eine vergleichsweise schnelle Entgasung bei hohem Nutzvolumen erreicht werden. Unabhängig davon ist jede Maßnahme für sich vorteilhaft.

Bei Versuchen mit dem erfindungsgemäßen Rechenrührer konnte eine Zeit, die zum Entgasen der Flüssigkeit benötigt wurde, von 2 h 38 min (ohne erfindungsgemäßen Rechenrührer) auf etwa 1 h reduziert werden, was einer Zeitersparnis von 1 h 38 min (minus 60 %) entspricht. Weiterhin erzeugt der Rechenrührer (insbesondere bei vergleichsweise dünnen Zinken) keine wesentlichen Turbulenzen an der Oberfläche, so dass es (im Wesentlichen) vermieden wird, dass Luftblasen unter die Oberfläche gemischt werden (was gerade dem gewünschten Entgasen widersprechen würde). Auch wird (aufgrund fehlender oder nur geringer Rotationsbewegung) eine Oberfläche des Behälters oberhalb der Flüssigkeitsoberfläche weniger stark verschmutzt, so dass eine Reinigung einfach erfolgen kann.

Im Allgemeinen sind keine chemischen Entgasungsmittel (die zu Nebenwirkungen führen können) notwendig (auch wenn diese grundsätzlich zugesetzt werden könnten).

Eine Rotationsgeschwindigkeit des Rechenrührers ist vorzugsweise vergleichsweise gering, so dass eine Drehung der Flüssigkeit (weitestgehend) vermieden wird. Beispielsweise ist eine Rotationsgeschwindigkeit geringer als 10 Umdrehungen pro Minute, vorzugsweise 5 Umdrehungen pro Minute.

Ein Zirkulieren der Flüssigkeit zwischen Abfuhreinrichtung und Zufuhreinrichtung kann durch eine entsprechende Pumpe ermöglicht werden. Koagulierte Luftblasen auf der Druckseite der Pumpe können vergleichsweise einfach aufgrund der vorliegenden Druckdifferenz entfernt werden.

Die oben beschriebenen schlitzförmigen Austrittsöffnungen der Düse können vertikal oder horizontal (oder noch anders) verlaufen.

Die Zufuhreinrichtung mit der (mindestens einen) Düse kann (insbesondere an einem Endabschnitt) horizontal verlaufen und/oder in einer Seitenwand des evakuierbaren Behälters aufgenommen sein. Alternativ kann die Zufuhreinrichtung mit der (mindestens einen) Düse zumindest in einem Endabschnitt vertikal (nach unten) verlaufen und/oder in einem Deckelabschnitt des (evakuierbaren) Behälters angeordnet sein. Insoweit gleichzeitig ein Rechenrührer vorgesehen ist, kann die Düse so angeordnet sein, dass ein austretender Strahl nicht auf den Rechenrührer (und/oder ein sonstiges Rührorgan) trifft. Beispielsweise kann die (mindestens eine) Düse so angeordnet und konfiguriert sein, dass der austretende Strahl auf oder zumindest in Richtung einer (seitlichen) Wandung des (evakuierbaren) Behälters trifft. Besonders bevorzugt ist eine Ausgestaltung der Zufuhreinrichtung mit der (mindestens einen) Düse, bei der zumindest ein Endabschnitt der Zufuhreinrichtung vertikal ausgerichtet ist (nach unten) und die Düse(n) radial (bzw. an einer Mantelfläche) angeordnet ist (sind), so dass ein an den Austrittsöffnungen austretender Strahl radial (in horizontaler Richtung) austritt.

Eine zwischen Zufuhreinrichtung und Abfuhreinrichtung zirkulierende Flüssigkeit kann ggf. beheizbar sein (bzw. es kann eine entsprechende Heizeinrichtung oder entsprechende Heizeinrichtungen vorgesehen sein).

Bei der zu entgasenden Flüssigkeit handelt es sich vorzugsweise um eine viskose, insbesondere hochviskose Flüssigkeit. Die Viskosität bei 23 °C beträgt vorzugsweise mindestens 2 mPa * s, weiter vorzugsweise mindestens 5 mPa * s, noch weiter vorzugsweise mindestens 50 mPa * s, noch weiter vorzugsweise mindestens 150 mPa * s. Die Viskosität kann mit einem Platte-Platte-Viskosimeter, beispielsweise mit einer Drehzahl von 10 s⁻¹ gemessen werden. Beispielsweise kann es sich bei der zu entgasenden Flüssigkeit um Epoxidharz handeln. Im Allgemeinen können jedoch auch (flüssige) Lebensmittel oder Vorprodukte für die Lebensmittelherstellung (wie beispielsweise Ketchup oder Tomatenpüree) zum Einsatz kommen, oder auch kosmetische Produkte (wie beispielsweise Zahnpasta oder Pflegeöle) oder sonstige Produkte (wie beispielsweise Agrarprodukte, Haushaltsprodukte, Farben und dergleichen) zum Einsatz kommen. Insbesondere ist die zu entgasende Flüssigkeit ein Klebstoff oder eine Vorstufe zur Herstellung eines solchen Klebstoffes.

Weitere Ausführungsformen ergeben sich aus den Unteransprüchen.

### Beschreibung der Zeichnungen

Vorteile und Zweckmäßigkeit der Erfindung werden aus der nachfolgenden Beschreibung bevorzugter Ausführungsbeispiele anhand der Figuren deutlich. Von diesen zeigen:
- Fig. 1: eine schematische Ansicht einer ersten Ausführungsform der erfindungsgemäßen Entgasvorrichtung;
- Fig. 2: eine schematische Ansicht einer zweiten Ausführungsform der Entgasvorrichtung;
- Fig. 3: einen Abschnitt der Zufuhreinrichtung einer schematischen Ansicht gemäß einer ersten Unterausführungsform;
- Fig. 4: einen Abschnitt der Zufuhreinrichtung einer schematischen Ansicht gemäß einer zweiten Unterausführungsform; und
- Fig. 5: ein Abschnitt der Zufuhreinrichtung einer schematischen Ansicht gemäß einer dritten Unterausführungsform.

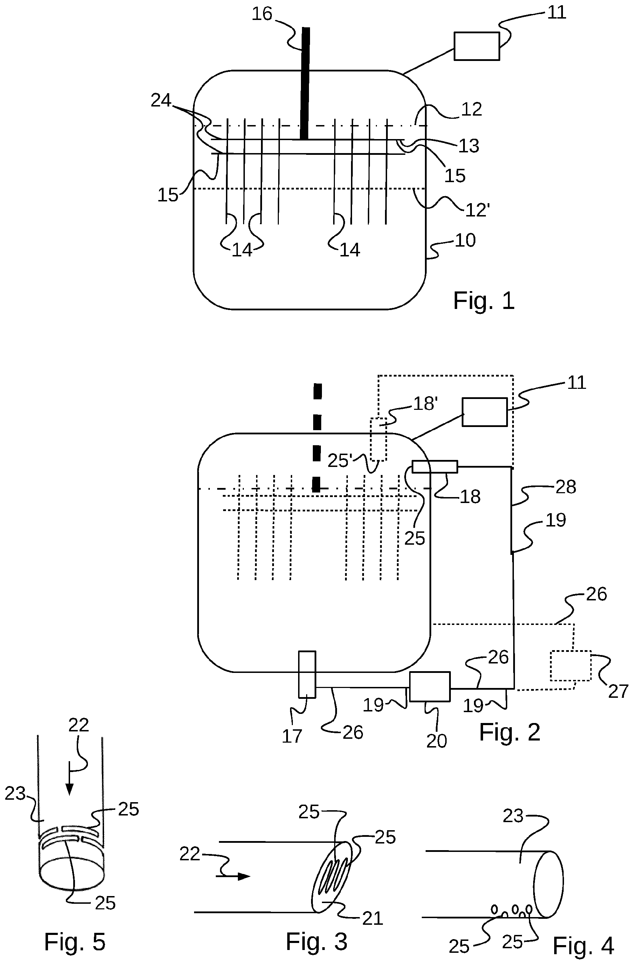

Fig. 1 zeigt eine Entgasvorrichtung, die einen evakuierbaren Behälter 10 umfasst, der über eine Evakuiereinrichtung (z.B. Saugpumpe) 11 evakuiert werden kann. Der Behälter weist also keine (dauerhaften) Öffnungen auf und ist vorzugsweise druckfest ausgebildet. In dem Behälter befindet sich eine Flüssigkeit, die eine Flüssigkeitsoberfläche 12 ausbildet. Weiterhin ist ein Rechenrührer 13 mit einer Vielzahl von Zinken 14 vorgesehen. Die Zinken 14 sind an zwei Armen 15 angeordnet, die von einer Welle 16 angetrieben werden können. Jede der Arme kann, wie dies in Figur 1 angedeutet, zwei (übereinander) angeordnete, z.B. stabförmige, Elemente aufweisen. Dadurch können sich die Zinken 14 durch die Flüssigkeit bewegen und brechen die Flüssigkeitsoberfläche 12 auf. Die Zinken wirken aufgrund ihrer Länge bei unterschiedlich hohen Füllständen 12, 12', die während der Entgasung auftreten können. Es kann effektiv eingeschlossenes Gas entweichen.

Fig. 2 zeigt eine zweite Ausführungsform der Entgaseinrichtung. Diese Ausführungsform kann auch mit der ersten Ausführungsform gemäß Fig. 1 kombiniert werden, was durch eine gestrichelte Darstellung der optionalen Elemente, gemäß der ersten Ausführungsform illustriert ist. Die zweite Ausführungsform zeigt ebenfalls einen evakuierbaren Druckbehälter 10 sowie eine Evakuiereinrichtung 11. Weiterhin ist eine Abfuhrvorrichtung 17 vorgesehen, über die Flüssigkeit aus dem Behälter 10 abgesaugt werden kann. Die Abfuhreinrichtung 17 ist mit einer Zufuhreinrichtung 18 verbunden, wobei in einer Verbindungsleitung 19 eine Pumpe 20 angeordnet sein kann. Die Zufuhreinrichtung 18 wiederum weist eine oder mehrere Düsen 25 auf. Anstelle (oder zusätzlich) zu der Zufuhreinrichtung 18 und (mindestens einen) Düse 25 kann eine Zufuhreinrichtung 18' und (mindestens eine) Düse 25' vorgesehen sein. Die Zufuhreinrichtung 18 ist so angeordnet, dass sie horizontal verläuft (und in einer Seitenwand des evakuierbaren Behälters angeordnet ist). Die Zufuhreinrichtung 18' ist demgegenüber so angeordnet, dass sie vertikal (nach unten) verläuft und in einem Deckelabschnitt des evakuierbaren Behälters angeordnet ist.

Wie Fig. 2 entnommen werden kann, kann die Verbindungsleitung teilweise durch ein Leitungssystem 26 gebildet werden, in dem eine Mischeinrichtung bzw. Zumischeinrichtung 27 angeordnet ist, wobei die Zumischeinrichtung über einen Leitungsabschnitt 28 kurzgeschlossen werden kann.

Fig. 3 zeigt einen Endabschnitt der Zufuhreinrichtung 18 gemäß einer ersten Unterausführungsform der zweiten Ausführungsform. Fig. 4 zeigt einen Endabschnitt der Zufuhreinrichtung 18 gemäß einer zweiten Unterausführungsform der zweiten Ausführungsform. In der Unterausführungsform gemäß Fig. 3 ist eine Endfläche 21 der Düse gegenüber einer axialen Richtung bzw. Strömungsrichtung 22 abgeschrägt. In dieser abgeschrägten Endfläche 21 sind mehrere schlitzförmige Düsen 25 angeordnet. In der Ausführungsform gemäß Fig. 4 sind in einem Endabschnitt 23 der Zufuhreinrichtung 18 an einer Umfangsfläche des Endabschnittes runde Düsen 25 angeordnet. Die Unterausführungsformen gemäß Fig. 3 und Fig. 4 sind vorzugsweise so angeordnet, dass diese (wie in Fig. 2 durch die Bezugszeichen 18 und 25 skizziert) horizontal ausgerichtet sind. Demgegenüber ist eine weitere Unterausführungsform für die Zufuhreinrichtung 18 in Fig. 5 gezeigt. Diese Unterausführungsform ist vorzugsweise so angeordnet, dass sie vertikal (gemäß den Bezugszeichen 18' und 25' in Fig. 2) verläuft. Weiterhin weist die Unterausführungsform gemäß Fig. 5 schlitzförmige Düsen 25 auf, die in einem entsprechenden Endabschnitt 23 angeordnet sind. Konkret können sich die Düsen 25 gemäß Fig. 5 in Umfangsrichtung erstrecken und/oder zwei - oder mehrreihig angeordnet sein. Dadurch kann einfach und effektiv Flüssigkeit radial nach außen austreten und ggf. vermieden werden, dass die Flüssigkeit auf den Rechenrührer (oder ein sonstiges Rührorgan) trifft. Beispielsweise kann die Flüssigkeit dann auf eine Seiteninnenwand des evakuierbaren Behälters treffen.

### Bezugszeichenliste

- 10: Behälter
- 11: Evakuiereinrichtung
- 12: Flüssigkeitsoberfläche
- 13: Rechenrührer
- 14: Zinken
- 15: Arm
- 16: Welle
- 17: Abfuhreinrichtung
- 18: Zufuhreinrichtung
- 19: Verbindungsleitung
- 20: Pumpe
- 20: Düse
- 21: Endfläche
- 22: Strömungsrichtung
- 23: Endabschnitt
- 24: Element
- 25: Düse
- 26: Leitungssystem
- 27: Zumischeinrichtung
- 28: Leitungsabschnitt

## Patentansprüche

1. Entgasvorrichtung zum Entgasen einer Flüssigkeit, umfassend einen insbesondere evakuierbaren Behälter (10), insbesondere Mischbehälter, zur Aufnahme der zu entgasenden Flüssigkeit, eine Abfuhreinrichtung (17) zum Abführen von in dem Behälter (10) stehender Flüssigkeit,eine Zufuhreinrichtung (18) zum Zuführen von Flüssigkeit, wobei die Zufuhreinrichtung (18) mit der Abfuhreinrichtung (17) fluidleitend verbunden ist derart, dass von der Abfuhreinrichtung (17) abgeführte Flüssigkeit über die Zufuhreinrichtung (18) zurück in die in dem Behälter (10) stehende Flüssigkeit geführt werden kann, wobei die Zufuhreinrichtung (18) mindestens eine Düse (25) umfasst, die derart positioniert ist, dass sie im Gebrauch der Entgasvorrichtung oberhalb einer Flüssigkeitsoberfläche (12) der in dem Behälter (10) stehenden Flüssigkeit angeordnet ist, sowie einen Rechenrührer (13) mit mindestens einem rotierbaren Arm (15) und einer Vielzahl von Zinken (14), die von dem mindestens einen Arm (15) abstehen und zum Eintauchen in die Flüssigkeit ausgebildet sind.

2. Entgasvorrichtung nach Anspruch 1,
**dadurch gekennzeichnet, dass**
eine Verbindungsleitung (19) zwischen Zufuhr- und Abfuhreinrichtung (17, 18) außerhalb des Behälters (10) verläuft, wobei die Verbindungsleitung (19) vorzugsweise zumindest abschnittsweise durch eine zu und/oder von einer Mischeinrichtung (27) führende Leitung (26) gebildet wird.

3. Entgasvorrichtung nach einem der vorangehenden Ansprüche,
**dadurch gekennzeichnet, dass**
die Zufuhreinrichtung (18) mindestens zwei, vorzugsweise mindestens vier Düsen (25) umfasst.

4. Entgasvorrichtung nach einem der vorangehenden Ansprüche,
**dadurch gekennzeichnet, dass**
eine Düse (25) oder mehrere Düsen (25) schlitzförmig ausgebildet ist/sind und/oder
eine Düse (25) oder mehrere Düsen (25) rund ausgebildet ist/sind und/oder eine oder mehrere Düsen (25) eine Austrittsfläche von höchstens 25 mm², vorzugsweise höchstens 15 mm², weiter vorzugsweise höchstens 10 mm² aufweist/aufweisen.

5. Entgasvorrichtung nach einem der vorangehenden Ansprüche,
**dadurch gekennzeichnet, dass**
eine Düse (25) oder mehrere Düsen (25) in einer Endfläche (21) der Zufuhreinrichtung (18) angeordnet ist, wobei die Endfläche (21) vorzugsweise gegenüber der Strömungsrichtung (22) eines in der Zufuhreinrichtung (18) strömenden Fluids abgeschrägt ist.

6. Entgasvorrichtung nach einem der vorangehenden Ansprüche,
**dadurch gekennzeichnet, dass**
der Rechenrührer (15) mindestens vier, vorzugsweise mindestens sechs, weiter vorzugsweise mindestens acht Zinken (14) aufweist.

7. Entgasvorrichtung nach einem der vorangehenden Ansprüche,
**dadurch gekennzeichnet, dass**
ein Zinken (14) oder mehrere oder alle Zinken (14) wie folgt ausgebildet und/oder angeordnet ist/sind:
- Länge: mindestens 200 mm, vorzugsweise mindestens 300 mm, weiter vorzugsweise mindestens 400 mm und/oder höchstens 800 mm, vorzugsweise höchstens 600 mm, weiter vorzugsweise höchstens 500 mm und/oder
- Durchmesser: mindestens 2 mm, vorzugsweise mindestens 4 mm, weiter vorzugsweise mindestens 5 mm und/oder höchstens 30 mm, vorzugsweise höchstens 18 mm, weiter vorzugsweise höchstens 10 mm und/oder
- Abstand zwischen zwei benachbarten Zinken: mindestens 50 mm, vorzugsweise mindestens 70 mm, weiter vorzugsweise mindestens 90 mm und/oder höchstens 300 mm, vorzugsweise höchstens 180 mm, weiter vorzugsweise höchstens 120 mm und/oder
- Verhältnis von Länge zu Durchmesser: mindestens 20, vorzugsweise mindestens 30, weiter vorzugsweise mindestens 35 und/oder höchstens 100, vorzugsweise höchstens 70, weiter vorzugsweise höchstens 60 mm und/oder
- im Querschnitt rund.

8. Entgasvorrichtung nach einem der vorangehenden Ansprüche,
**dadurch gekennzeichnet, dass**
einer oder mehrere oder alle der Zinken (14):
- von einem Arm (15), auf dem er/sie angeordnet ist/sind in zwei Richtungen abstehen und/oder
- zumindest abschnittweise von einem Arm (15), auf dem er/sie angeordnet ist/sind nach oben abstehen und/oder
- so angeordnet sind, dass er/sie im Betrieb der Entgasvorrichtung teilweise aus der Flüssigkeit herausragt/herausragen.

9. Entgasvorrichtung nach einem der vorangehenden Ansprüche,
**dadurch gekennzeichnet, dass**
in dem Behälter (10, wenn er als evakuierbarer Behälter (10) ausgebildet ist, ein Unterdruck von mindestens 100 mbar, vorzugsweise mindestens 250 mbar, noch weiter vorzugsweise mindestens 500 mbar, noch weiter vorzugsweise 900 mbar, noch weiter vorzugsweise mindestens 950 mbar, herstellbar ist.

10. Entgasvorrichtung nach einem der vorangehenden Ansprüchen,
**dadurch gekennzeichnet, dass**
mindestens ein Rührer zum Mischen und/oder Rühren der Flüssigkeit in dem Behälter (10), insbesondere zusätzlich zu dem Rechenrührer (13), vorgesehen ist.

11. Verwendung einer Entgasvorrichtung nach einem der vorangehenden Ansprüche zum Entgasen einer Flüssigkeit.

12. Verfahren zum Entgasen einer Flüssigkeit, insbesondere unter Verwendung einer Entgasvorrichtung nach einem der Ansprüche 1 bis 11, umfassend die Schritte:
- Abführen von in einem, insbesondere evakuierbaren Behälter (10) stehender Flüssigkeit
- Rückführen der abgeführten Flüssigkeit in die in dem Behälter (10) stehende Flüssigkeit über mindestens eine Düse (25), wobei die Düse (25) oberhalb einer Flüssigkeitsoberfläche (12) der in dem Behälter (10) stehenden Flüssigkeit angeordnet ist,
wobei die sich im Behälter (10) befindliche Flüssigkeit mit einem Rechenrührer (13) umgerührt wird.

13. Verfahren nach Anspruch 12,
**dadurch gekennzeichnet, dass**
der Behälter (10) als evakuierbarer Behälter ausgebildet ist und zumindest teilweise evakuiert wird, wobei ein Unterdruck innerhalb des Behälters (10) auf mindestens 100 mbar, vorzugsweise mindestens 250 mbar, weiter vorzugsweise mindestens 500 mbar, noch weiter vorzugsweise mindestens 900 mbar, noch weiter vorzugsweise mindestens 950 mbar, noch weiter vorzugsweise bis zu 985 mbar eingestellt wird,
wobei der Behälter (10) vorzugsweise sukzessive, insbesondere schrittweise, evakuiert wird, wobei vorzugsweise bei einem Unterdruck von 0 mbar gestartet wird und/oder ein Enddruck einem der oben genannten Werte entspricht,
wobei weiter vorzugsweise ein vorgesehener Rechenrührer (13) über die gesamte Phase der Erhöhung des Unterdruckes in Betrieb ist und/oder die mindestens eine Düse (25) nur über einen Teilbereich der Druckerhöhung, beispielsweise von 0 mbar bis (maximal) 800 mbar oder bis (maximal) 940 mbar in Betrieb ist.

## Claims

1. Degassing apparatus for degassing a liquid, comprising an in particular evacuable container (10), in particular mixing container, for accommodating the liquid to be degassed, a discharge device (17) for discharging liquid standing in the container (10), a supply device (18) for supplying liquid, wherein the supply device (18) is connected in a fluid-conducting manner to the discharge device (17) such that liquid discharged by the discharge device (17) can be conducted back into the liquid standing in the container (10) via the supply device (18), wherein the supply device (18) comprises at least one nozzle (25) which is positioned such that, during the use of the degassing apparatus, it is arranged above a liquid surface (12) of the liquid standing in the container (10), and a rake stirrer (13) having at least one rotatable arm (15) and having a multiplicity of teeth (14) which project from the at least one arm (15) and are designed for being dipped into the liquid.

2. Degassing apparatus according to Claim 1,
**characterized in that**
a connection line (19) between the supply and discharge devices (17, 18) runs outside the container (10), wherein the connection line (19) is preferably formed at least sectionally by a line (26) which leads to and/or from a mixing device (27) .

3. Degassing apparatus according to either of the preceding claims,
**characterized in that**
the supply device (18) comprises at least two, preferably at least four, nozzles (25).

4. Degassing apparatus according to one of the preceding claims,
**characterized in that**
a nozzle (25) or multiple nozzles (25) is/are of slot-like form, and/or
a nozzle (25) or multiple nozzles (25) is/are of round form,
and/or one or more nozzles (25) has/have an outlet area of at most 25 mm², preferably at most 15 mm², more preferably at most 10 mm².

5. Degassing apparatus according to one of the preceding claims,
**characterized in that**
a nozzle (25) or multiple nozzles (25) is/are arranged in an end surface (21) of the supply device (18), wherein the end surface (21) is preferably bevelled with respect to the flow direction (22) of a fluid flowing in the supply device (18).

6. Degassing apparatus according to one of the preceding claims,
**characterized in that**
the rake stirrer (15) has at least four, preferably at least six, more preferably at least eight, teeth (14) .

7. Degassing apparatus according to one of the preceding claims,
**characterized in that**
a tooth (14) or multiple or all of the teeth (14) is/are formed and/or arranged as follows:
- length: at least 200 mm, preferably at least 300 mm, more preferably at least 400 mm, and/or at most 800 mm, preferably at most 600 mm, more preferably at most 500 mm, and/or
- diameter: at least 2 mm, preferably at least 4 mm, more preferably at least 5 mm, and/or at most 30 mm, preferably at most 18 mm, more preferably at most 10 mm, and/or
- distance between two adjacent teeth: at least 50 mm, preferably at least 70 mm, more preferably at least 90 mm, and/or at most 300 mm, preferably at most 180 mm, more preferably at most 120 mm, and/or
- ratio of length to diameter: at least 20, preferably at least 30, more preferably at least 35, and/or at most 100, preferably at most 70, more preferably at most 60 mm, and/or
- round in cross section.

8. Degassing apparatus according to one of the preceding claims,
**characterized in that**
one or more or all of the teeth (14):
- projects/project in two directions from an arm (15) on which it/they is/are arranged, and/or
- projects/project upwardly at least sectionally from an arm (15) on which it/they is/are arranged, and/or
- is/are arranged such that, during the operation of the degassing apparatus, it/they partially projects/project from the liquid.

9. Degassing apparatus according to one of the preceding claims,
**characterized in that**
a negative pressure of at least 100 mbar, preferably at least 250 mbar, even more preferably at least 500 mbar, even more preferably 900 mbar, even more preferably at least 950 mbar, is able to be produced in the container (10) if it is designed as an evacuable container (10).

10. Degassing apparatus according to one of the preceding claims,
**characterized in that**
provision is made of at least one stirrer for mixing and/or stirring the liquid in the container (10), in particular in addition to the rake stirrer (13).

11. Use of a degassing apparatus according to one of the preceding claims for degassing a liquid.

12. Method for degassing a liquid, in particular using a degassing apparatus according to one of Claims 1 to 11, comprising the steps of:
- discharging liquid standing in an in particular evacuable container (10),
- returning the discharged liquid into the liquid standing in the container (10) via at least one nozzle (25), wherein the nozzle (25) is arranged above a liquid surface (12) of the liquid standing in the container (10),
wherein the liquid situated in the container (10) is stirred by a rake stirrer (13).

13. Method according to Claim 12,
**characterized in that**
the container (10) is designed as an evacuable container and is at least partially evacuated, wherein a negative pressure within the container (10) is set to at least 100 mbar, preferably at least 250 mbar, more preferably at least 500 mbar, even more preferably at least 900 mbar, even more preferably at least 950 mbar, even more preferably up to 985 mbar,
wherein the container (10) is preferably evacuated in a successive manner, in particular step by step, wherein preferably a negative pressure of 0 mbar prevails at the start and/or an end pressure corresponds to one of the aforementioned values, wherein furthermore preferably a provided rake stirrer (13) is in operation over the entire phase of the increase of the negative pressure and/or the at least one nozzle (25) is in operation only over a partial range of the pressure increase, for example from 0 mbar to (at most) 800 mbar or to (at most) 940 mbar.

## Revendications

1. Dispositif de dégazage d'un liquide, comprenant un récipient (10), en particulier un récipient mélangeur, dans lequel notamment le vide peut être effectué et qui est destiné à recevoir le liquide à dégazer, un moyen d'évacuation (17) destiné à évacuer un liquide se trouvant dans le récipient (10), un moyen d'amenée (18) destiné à amener un liquide, le moyen d'amenée (18) étant en communication fluidique avec le moyen d'évacuation (17) de telle sorte que le liquide évacué du moyen d'évacuation (17) puisse être ramené dans le liquide se trouvant dans le récipient (10) par le biais du moyen d'amenée (18), le moyen d'amenée (18) comprenant au moins une buse (25) qui est positionnée de manière à être disposée au-dessus d'une surface (12) du liquide se trouvant dans le récipient (10) lors de l'utilisation du dispositif de dégazage, et un agitateur à râteau (13) pourvu d'au moins un bras rotatif (15) et d'une pluralité de dents (14) qui font saillie depuis l'au moins un bras (15) et qui sont conçues pour plonger dans le liquide.

2. Dispositif de dégazage selon la revendication 1,
**caractérisé en ce que**
un conduit de liaison (19) s'étend entre les moyens d'amenée et d'évacuation (17, 18) à l'extérieur du récipient (10),
le conduit de liaison (19) étant de préférence formé, au moins en partie, par un conduit (26) menant à un moyen de mélange (27) et/ou provenant de celui-ci.

3. Dispositif de dégazage selon l'une des revendications précédentes,
**caractérisé en ce que**
le moyen d'amenée (18) comprend au moins deux, de préférence au moins quatre, buses (25).

4. Dispositif de dégazage selon l'une des revendications précédentes,
**caractérisé en ce que**
une buse (25) ou une pluralité de buses (25) sont conçues sous la forme de fente et/ou
une buse (25) ou une pluralité de buses (25) sont conçues pour être rondes et/ou une buse ou une pluralité de buses (25) possèdent une surface de sortie de 25 mm² maximum, de préférence de 15 mm² maximum, plus préférablement de 10 mm² maximum.

5. Dispositif de dégazage selon l'une des revendications précédentes,
**caractérisé en ce que**
une buse (25) ou une pluralité de buses (25) sont disposées dans une face d'extrémité (21) du moyen d'amenée (18), la face d'extrémité (21) étant de préférence biseautée par rapport à la direction d'écoulement (22) d'un fluide s'écoulant dans le moyen d'amenée (18).

6. Dispositif de dégazage selon l'une des revendications précédentes,
**caractérisé en ce que**
l'agitateur à râteau (15) comporte au moins quatre, de préférence au moins six, plus préférablement au moins huit, dents (14).

7. Dispositif de dégazage selon l'une des revendications précédentes,
**caractérisé en ce que**
une dent (14) ou plusieurs dents ou toutes les dents (14) sont conçues et/ou disposées de la manière suivante :
- longueur : au moins 200 mm, de préférence au moins 300 mm, plus préférablement au moins 400 mm et/ou au maximum 800 mm, de préférence au maximum 600 mm, plus préférablement au maximum 500 mm et/ou
- diamètre : au moins 2 mm, de préférence au moins 4 mm, plus préférablement au moins 5 mm et/ou au maximum 30 mm, de préférence au maximum 18 mm, plus préférablement au maximum 10 mm et/ou
- distance entre deux dents adjacentes : au moins 50 mm, de préférence au moins 70 mm, plus préférablement au moins 90 mm et/ou au maximum 300 mm, de préférence au maximum 180 mm, plus préférablement au maximum 120 mm et/ou
- rapport longueur sur diamètre : au moins 20, de préférence au moins 30, plus préférablement au moins 35 et/ou au maximum 100, de préférence au maximum 70, plus préférablement au maximum 60 mm et/ou
- pour être rondes en coupe transversale.

8. Dispositif de dégazage selon l'une des revendications précédentes,
**caractérisé en ce que**
une dent ou plusieurs ou toutes les dents (14) :
- font saillie dans deux directions depuis un bras (15) sur lequel elles sont disposées et/ou
- font saillie vers le haut au moins en partie depuis un bras (15) sur lequel elles sont disposées et/ou
- sont disposées de manière à faire saillie partiellement depuis le liquide pendant le dégazage.

9. Dispositif de dégazage selon l'une des revendications précédentes,
**caractérisé en ce que**
une pression négative d'au moins 100 mbar, de préférence d'au moins 250 mbar, plus préférablement d'au moins 500 mbar, encore plus préférablement de 900 mbar, encore plus préférablement d'au moins 950 mbar est générée dans le récipient (10) si celui-ci est conçu comme un récipient (10) dans lequel le vide peut être effectué.

10. Dispositif de dégazage selon l'une des revendications précédentes,
**caractérisé en ce que**
au moins un agitateur est prévu pour mélanger et/ou agiter le liquide dans le récipient (10), en particulier en plus de l'agitateur à râteau (13).

11. Utilisation d'un dispositif de dégazage selon l'une des revendications précédentes pour dégazer un liquide.

12. Procédé de dégazage d'un liquide, notamment à l'aide d'un dispositif de dégazage selon l'une des revendications 1 à 11, le procédé comprenant les étapes suivantes :
- évacuer un liquide se trouvant dans un récipient (10) dans lequel notamment le vide peut être effectué
- ramener le liquide évacué dans le liquide se trouvant dans le récipient (10) par le biais d'au moins une buse (25), la buse (25) étant disposée au-dessus d'une surface (12) du liquide se trouvant dans le récipient (10),
le liquide se trouvant dans le récipient (10) étant agité avec un agitateur à râteau (13).

13. Procédé selon la revendication 12,
**caractérisé en ce que**
le récipient (10) est conçu comme un récipient, dans lequel le vide peut être effectué, et est au moins partiellement mis sous vide, une pression négative d'au moins 100 mbar, de préférence d'au moins 250 mbar, plus préférablement d'au moins 500 mbar, encore plus préférablement d'au moins 900 mbar, encore plus préférablement d'au moins 950 mbar, encore plus préférablement jusqu'à 985 mbar, étant réalisée à l'intérieur du récipient (10),
le récipient (10) étant de préférence mis sous vide de préférence successivement, notamment par étapes, le début étant de préférence à une pression négative de 0 mbar et/ou une pression finale correspondant à l'une des valeurs ci-dessus,
un agitateur à râteau prévu (13) étant plus préférablement en fonctionnement pendant toute la phase d'augmentation de la pression négative et/ou l'au moins une buse (25) étant en fonctionnement uniquement sur une partie de l'augmentation de pression, par exemple de 0 mbar à 800 mbar (maximum) ou à 940 mbar (maximum).
